# EUROPEAN PATENT SPECIFICATION

(11) **EP 0 758 633 B1**
(45) Date of publication and mention of the grant of the patent: **21.04.1999**
(21) Application number: 96305366.5
(22) Date of filing: 19.07.1996
(51) Int. Cl.: C04B 38/00, B01J 20/02, C05G 3/00, A01N 25/08

(54) **Porous granules**
Poröse Granulate
Granules poreux

(30) Priority: 25.07.1995 GB 9515242
(43) Date of publication of application: 19.02.1997
(73) Proprietor: ECC INTERNATIONAL LIMITED, Theale, Reading, Berkshire RG7 4SA (GB)
(72) Inventor: Hearle, J.A., Par, Cornwall PL24 2SQ (GB); Taylor, D.A., Par, Cornwall PL24 2SQ (GB); Wilshaw, N.J.G., Par, Cornwall PL24 2SQ (GB)
(74) Representative: McCormack, Derek James

(56) References cited:
- EP-A- 0 068 287
- EP-A- 0 427 704
- EP-A- 0 516 294
- DE-A- 2 648 119
- DE-A- 4 011 255
- FR-A- 2 548 175
- GB-A- 2 271 987
- CHEMICAL ABSTRACTS, vol. 111, no. 24, 11 December 1989 Columbus, Ohio, US; abstract no. 218430x, H. MORIMOTO ET AL.: page 254; XP002017475 & JP-A-01 131 079 (ID.)

## Description

The present invention relates to porous granules especially granules which are loaded for the storage and release of chemicals.

This invention is concerned in particular with porous granules which possess a void volume which is a significant proportion of their total volume, and which absorbs a reagent into its void volume, and releases the same slowly into a medium in which the granules are suspended.

Many applications exist in industry and consumer products for a porous material which will absorb a chemical, eg. an active reagent, and release the same in a controlled manner into a medium in which the porous material is suspended. Possible applications include the release of a biocide or a plant nutrient into a liquid medium, and the release of a perfume into a gas or vapour. If a porous material is to be useful in these applications, it should be able to absorb the active reagent quickly, and in a volume which represents a high proportion of its own volume, but to release the active ingredient relatively slowly.

Many kinds of porous granule for slow release of reagents are known in the prior art. Generally, such granules are organic or have an organic coating or film especially ones provided by a polymeric material, which confers the slow release properties on the granules.

The present invention is concerned with granules for storage and slow release of chemicals which granules comprise an inorganic porous ceramic material.

GB1570608 describes use of an inorganic porous ceramic material for storage and release of chemicals, eg. as a pine scented tree shaped ceramic article. However, the pore structure of such material and the method described for introducing the chemical into the pores thereof are not ideal. The material described has an open fine pore structure wherein the pores are smaller than 5µm.

DE-A-2,648,119 describes granules for slow release of active substances. The granules have a porous structure with semi-permeable walls. The granules are preferably formed from bloated clay.

FR-A-2,548,175 describes impregnation of ceramic articles with perfume in such a way that the perfume is released over a long period. The ceramic articles are relatively large, eg earthenware pebbles, fruit, flowers or ash trays.

GB-A-2,271,987 describes a method of producing porous ceramic granules. The present invention provides a method and product produced thereby which enables granules produced in a manner described in GB-A-2,271,987 to be produced suitable for use in slow release applications.

According to the present invention in a first aspect there is provided a method of producing a porous, ceramic material which comprises granules of an extruded, foamed material comprising a kandite clay which includes the steps of producing a foamed ceramic-forming material from a wet kandite clay-containing particulate material, extruding the foamed ceramic-forming material in the form of pellets or prills and calcining the extruded pellets or prills to provide an inner structure comprising closed cell pores within the pellets or prills, and characterised in that the calcining is carried out in a rotary calciner, whereby a multiplicity of the pellets or prills are tumbled over one another during calcination, the granules produced thereby having a continuous outer skin which has a porosity which allows fluids to diffuse slowly therethrough, granules being suitable for the storage in and slow release of a chemical or chemicals from the closed cells inner structure.

The extruded pellets or prills may be dried prior to calcining.

According to the present invention in a second aspect there is provided a porous ceramic material suitable for the storage and slow release therefrom of a chemical or chemicals which comprises granules produced by the method according to the first aspect, the granules having an inner structure comprising closed cell pores and, covering substantially all of the material comprising the inner structure, a continuous outer skin which has pores having a size less than 0.1µm.

The granules may have a chemical or chemicals contained in the closed cell pores of the inner structure of the granules for slow release therefrom.

By "granules" is meant pieces, lengths, prills, pellets and the like which may for example have sizes having a major dimension in the range O.lmm to 20mm, especially 1mm to 10mm.

The inner structure of the granules may be such that, mainly, the closed cell pores have sizes of or greater than 5µm, especially mainly from 5µm to 100µm.

The continuous outer skin may mainly have a thickness less than 50µm and preferably less than the size of the closed cell pores. The said skin may have a porosity which allows fluids to diffuse slowly through the skin.

The said skin may be microporous, eg have pores through the skin which are less than 1µm, especially less than 0.1µm in size. Preferably, the skin has few pores greater than 1µm in size. For example, the skin may be such that at least 99% of its surface area has no pores greater than 1µm in size. The outer skin extends substantially all around the material comprising the inner structure.

The porous ceramic material according to the first aspect may be made in one of the ways described hereinafter.

According to the present invention in a third aspect there is provided a method of preparing a porous granular material containing a chemical or chemicals releasable therefrom including the steps of forming granules of a porous ceramic material according to the first aspect, placing the granules in an evacuable enclosure, evacuating the enclosure to withdraw air or any other substance already contained in the pores of the porous granular material, and allowing the chemical or a substance to be converted into the chemical to be absorbed into the granules to be stored in the closed cell pores thereof.

The chemical may be contained in the enclosure when the enclosure is evacuated. However, we prefer to have a source of the chemical outside the enclosure and to deliver, whilst the granules are in the evacuated enclosure, a stream comprising the chemical to be contained by the granules into the enclosure to load the cellular pores of the granules with the chemical. This avoids the need for maintaining a supply of the chemical in the enclosure and gives better control over the pore filling process conditions, eg. if the temperature of the source of chemical is required to be different from that of the granules.

The evacuable enclosure may be a conventional flask or other vessel connected to a vacuum pump. Evacuation of the enclosure may be applied until the pressure has reached less than 10⁻³kg/m², preferably less than 6 x 10⁻⁴kg/m², and is maintained at that level for at least 5 minutes, preferably at least 10 minutes.

The stream of the chemical to be applied to and contained by the granules in the evacuated enclosure may conveniently be formed by allowing the pressure differential between the evacuated enclosure and its outside environment at least partially to equilibrate by suction into the enclosure from the outside environment through a fluid source of the chemical.

Thus, the chemical is sucked into the enclosure and into the cellular pores of the granules therein by release of the vacuum between the enclosure and the source of the chemical.

The chemical is preferably admitted into the evacuated enclosure at an inlet which is adapted so that the chemical may permeate upwardly through the granules within the enclosure. The enclosure may comprise a flask or vessel in which the granules are contained in a bed or collection and the inlet may comprise an end member of a line or pipe extending from the source of the chemical, the end member being located near the bottom of the bed or collection of the granules in the flask or vessel. The end member may conveniently comprise a perforated bulb from which the chemical may be ejected in various directions to permeate laterally and upwardly through the surrounding region containing the granules.

The chemical to be delivered to the granules may be in the form of a liquid and may be deposited in the granules as a liquid, or as a semi-solid or solid, although it could alternatively comprise a gaseous substance, eg. silane, which reacts with another substance, also delivered to the granules, to form a liquid, semi-liquid or solid deposit in the granules as appropriate.

Where the chemical is delivered as a liquid to the granules the source of the chemical may comprise a solution formed using a liquid solvent, which may be an aqueous and/or organic solvent as appropriate, in which the chemical is contained or, alternatively, a charge of the chemical itself in liquid form, eg. obtained by melting the chemical. A moderate elevated temperature, eg. in the range 30°C to 90°C, may be employed to heat the source of the chemical and the enclosure containing the granules to facilitate the granule filling procedure.

Preferably, the chemical where in liquid form, is admitted to the enclosure until the liquid reaches a level in the enclosure above the granules. For example, the liquid in the enclosure may reach a level equivalent to from 10% to 30% by volume in excess of the bulk volume of the granules.

The pressure in the enclosure may be returned to atmospheric by admitting atmospheric air into the enclosure preferably via the region above the granules. This will pressurise the enclosure and force more of the chemical-containing liquid into the pores of the granules. The source of the chemical, where outside the enclosure, may be isolated from the granules by use of a suitable control valve in the chemical delivery line (ie., from the source to the enclosure).

Where the chemical is delivered in a solvent to the granules, the solvent may, following loading of the cellular pores of the granules with the chemical in the solvent, be removed in a known way, eg. by drying the granules optionally using a current of a drying agent, eg. warm air.

We have found that by introducing a releasable chemical into porous ceramic granules of the kind described in the manner specified in accordance with the second aspect of the present invention, the chemical may be stored for long periods in large percentage volumes in the granules and released only slowly at a controlled rate which can be selected into a required environment. For example, in certain applications the granules may be employed in an aqueous or other flowing system to release the chemical slowly and in controlled quantities into the flow.

Where the granules of porous ceramic material are treated so as to store the chemical therein by simple soaking as described in the prior art the amount of chemical stored will not reach a suitable level. For instance, the granules may be formed of ceramic material whose particles have a density of say 2.6g/cm³ but which themselves have a density of less than 1g/cm³, eg. 0.2g/cm³. If the granules are soaked in an aqueous solution containing the chemical to be stored, the granules will initially float and absorb the solution by displacing air. However, when the density of the granules containing the solution reaches that of the solution (ie. greater than about 1g/cm³) the granules will sink, and no more air will be displaced, and no more solution will be absorbed. Thus, the granules may only be partially filled using soaking alone. Filling the granules with chemical in accordance with the second aspect of the present invention allows the volume of chemical absorbed to be closer to the theoretical maximum, thereby facilitating greater storage capacity of the chemical in the granules.

The continuous skin of the granules is formed as a result of the method employed to produce the granules. The foamed ceramic material prior to calcining is extruded as pellets or prills in such a manner that a skin of the ceramic material is formed on extrusion by the frictional drag over the surface of the prills or pellets produced by the extrusion nozzle. The shape and size of the extrusion aperture may be chosen by experimental design to give a suitable surface frictional drag. Furthermore, the calcining is carried out in a rotary calciner in which a plurality of the pellets or prills are calcined together and the pellets or prills are tumbled over one another, thereby facilitating formation of a skin of the ceramic material over the ends of the pellets or prills. The temperature of calcining may be not more than 100°C below the fluxing temperature of the material being calcined, which further facilitates the skin formation.

Various methods are known in the prior art for the production of foamed ceramic material and the foamed ceramic material which may be employed to form by extrusion and rotary calcination the granular material according to the second aspect of the present invention may be prepared using these various methods. Thus, the foamed ceramic material may be produced by using one of the methods described in prior patent specifications GB986,635; and GB2,067,174B.

The foamed ceramic material is advantageously prepared by use of one form of the method disclosed in Patent Specification GB2,271,987 by the present Applicants in which a ceramic granular foam material is prepared by:
(a) preparing a foam from a particulate mineral, eg clay, slurry;
(b) dividing the foam into discrete pellets or prills by extrusion; and
(c) calcining the pellets or prills at an elevated temperature.

The foamed ceramic material produced by that method incorporates suitable bubbles or cells or parts thereof providing the closed cell pores of the granule inner structure. The bubbles produced by the method described in GB2,271,987B are polyhedral bubbles of varying sizes bounded by thin walls, the walls and junctions between walls generally bounding two or usually more bubbles. Granules larger than 100µm, preferably larger than 200µm, will usually incorporate a plurality of such bubbles or parts thereof. Thus, granules having millimetre dimensions will incorporate many such bubbles.

The material which is employed to form the foamed ceramic material (from which the granular material according to the second aspect of the present invention is obtained) may comprise any one or more of the known minerals and/or synthetic kandite clay containing materials from which ceramics may be formed.

Clay minerals of the kandite group include, for example, kaolinite, dickite, nacrite and halloysite. "Kaolinite" includes kaolin type clays, ball clays, fire clays and China clays. Such clays occur in nature (and may be used) in the form of kaolinite plus other minerals, eg one or more of illite, mica, quartz and feldspar. The kandite clay mineral may be used in its natural, hydroxylated or hydrous state.

Where the foamed ceramic material employed to produce material employed in the method according to the invention is formed from one or more mineral materials (optionally together with synthetic material) the mineral(s) may for example be one or more of the naturally occurring kandite clay minerals described above.

Where the foamed ceramic material is formed from one or more synthetic ceramic forming materials (together with mineral material), the material(s) may in general be selected from the wide range of synthetic materials, eg synthetic aluminosilicates, known to form ceramics.

Generally, the foamed ceramic material may comprise porous granules substantially all of which are composed of inorganic particles which have been sintered together, the bulk density of the material preferably being no greater than 0.75g.cm⁻³. The granules may have a largest dimension of up to 20mm or more in size although the preferred granule size range is from 1mm to 10mm.

The granules preferably have a bulk density of at least 0.120 g.cm⁻³. Preferably, the bulk density is no greater than 0.700 g.cm⁻³.

The mineral and/or synthetic material employed to produce the required foamed ceramic material will generally be employed initially as particulate material incorporated in a suitable liquid medium in which a suitable suspension or dispersion can be formed. Suitable liquid media are known in relation to the formation of ceramic materials from the various classes of known material. In many cases, especially where the particulate material comprises a mineral, a suitable liquid medium comprises water or an aqueous solution. Foam may be made from the liquid medium by a process involving incorporating a gas in the liquid. The liquid may contain a surface active agent or surfactant to form a stable froth.

Examples of suitable surface active agents include known cationic, anionic, non-ionic and amphoteric surface active agents. Non-ionic agents are preferred.

The gas may for example be air incorporated by agitating the liquid medium to form a froth. The gas may be added to the liquid medium before or after the particulate material (and other optional additives) is added thereto.

Conveniently, as described in GB2,067,174B, an aqueous foam containing a surface active agent may be formed prior to addition to the ceramic forming particulate material. The aqueous foam may be added to a paste or slurry containing the particulate material. The addition may conveniently be carried out in an extrusion machine from which foamed ceramic material is to be extruded. The machine may be a screw extruder, eg. a co-rotating twin screw extruder. The machine may extrude foamed ceramic material into a plurality of individual elongate portions. A plurality of such portions may be formed at the same time by extrusion through a nozzle having multiple extrusion apertures. The portions may be divided by allowing extrudate to fall onto a moving belt which by the action of carrying away the material causes lengths or portions to break from the extruding material. In any event, the portions or pellets so formed may be collected and sized by one or more screen meshes, eg so that only lengths not less than 0.1mm preferably between lmm and lOmm, are selected. The moving belt itself may comprise a wire mesh providing a screen. The selected portions may be further treated by drying in a heated atmosphere, eg 100°C to 200°C and thereafter by calcining as described hereinafter.

The foamed ceramic material produced in the manner described may incorporate one or more additive materials added at one or more of the stages of producing such material or after its production. The foamed ceramic material may, for example, incorporate one or more of a fluxing material, for example forming from 5 per cent to 50 per cent by weight of the mixture with the particulate material (mineral and/or synthetic material), the fluxing agent comprising for example mica or feldspar, which subsequently reduces the temperature at which the material may be calcined, a biocide eg forming up to 1 per cent by weight of the solids portion of the foamed ceramic material, or an organic or inorganic binder or filler or a combustible material, eg forming up to 30 per cent by weight of the solids portion of the foamed ceramic material.

A particular method of carrying out the method according to the first aspect of the present invention comprises the following steps:
(a) preparing a foam from an aqueous mixture of a particulate ceramic forming kandite clay-containing material and a fluxing agent;
(b) drying the foam; and
(c) calcining the foam at an elevated temperature to form a calcined foamed ceramic material.

Calcining is carried out in a rotary calciner giving the tumbling action described hereinbefore. The temperature and time of the calcining will depend on the material being calcined and the amount of fluxing agent present but, for example, material comprising clay may be calcined at a temperature typically in the range 800C to 1600C for a period of 5 minutes to 24 hours.

The granules employed in the method according to the first aspect may have at least 25% its volume, preferably up to at least 80% of its volume consisting of voids provided by the closed cells of the porous inner structure.

The outer skin of the granules affords resistance to the passage of the chemical therethrough, and enables the release of the chemical to be controlled. The granule skin resistance and the cell sizes of the inner structure of the granules may be chosen to give the desired release properties in the particular application in which the chemical loaded granules are to be used.

The chemical(s) loaded into the granules in accordance with the present invention may in general comprise many of the chemicals loaded into inert carriers for slow release therefrom as in the prior art. Thus, for example, the chemical(s) may comprise air freshener, fragrance, scent or perfume etc., for release into a gaseous medium or biocides, flavourings and nutrients for release into liquid media, eg. aqueous flowing systems or chemical or biochemical reactors. Other possible chemicals include pharmaceuticals for controlled release into the body of humans or animals.

Embodiments of the present invention will now be described by way of example only with reference to the accompanying drawings in which:

Figure 1 is a micrograph showing the structure of a porous ceramic material embodying the invention in its first aspect.

Figure 2 is a diagrammatic side view of apparatus for carrying out a method embodying the second aspect of the present invention.

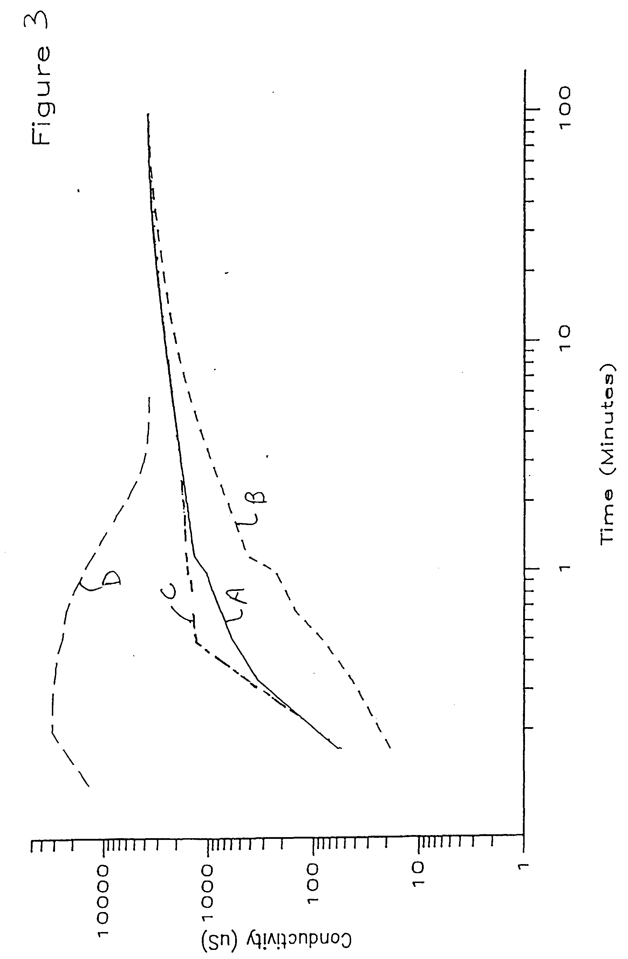

Figure 3 is a graph of conductivity against time for various samples including two loaded with potassium nitrate solution in the manner embodying the present invention as illustrated with reference to Figure 2. In Figure 3, curves A and B represent samples loaded at rates of 184 ml/minute and 43ml/minute respectively by the method embodying the invention and curves C and D represent control and flooded samples all as described in Example 1 hereinafter.

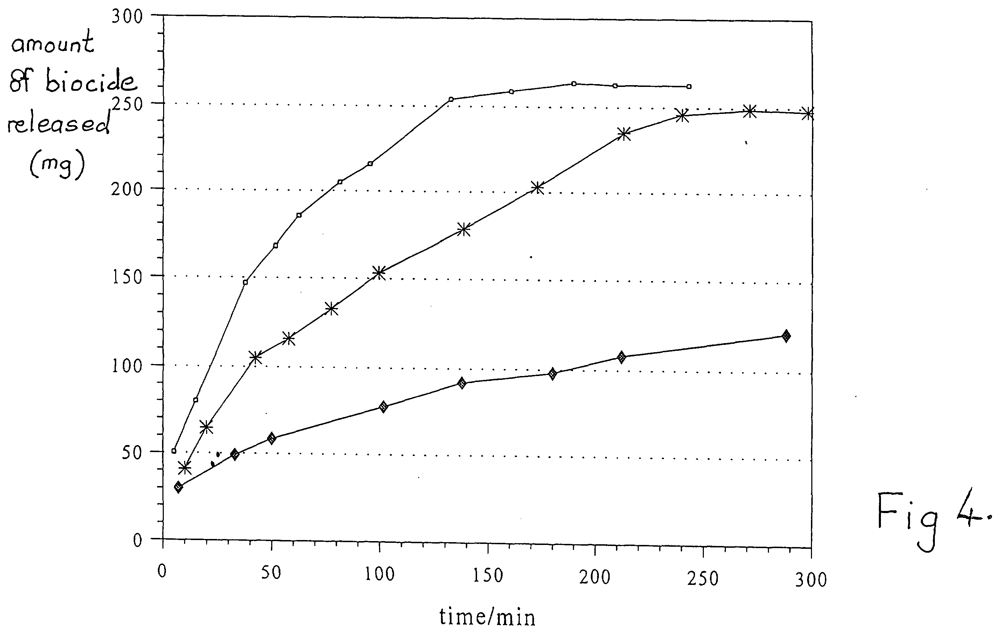

Figure 4 is a graph, curve A, of biocide released versus time for a porous ceramic material loaded with biocide by a method embodying the invention. Also shown in Figure 4, as described in Example 2, are corresponding curves b and c for control and prior art material (BIOFIX E5) respectively.

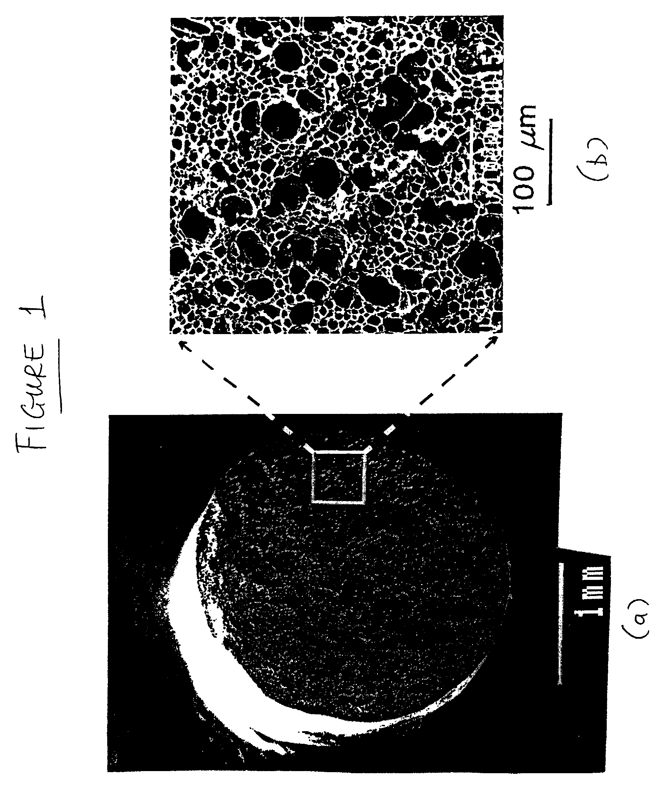

Figure 1 shows a cross-sectional view of the structure of a porous ceramic material embodying the invention, eg. as produced by the method described in Example 1 hereinafter. As seen in Figure 1a, the material consists of a pellet having a diameter of about 2.5mm and a length of several millimetres the material comprising a multiplicity of hollow cells surrounded by a continuous outer skin.

In Figure 1b, a portion of the interior of the structure of area Q similar to that marked in Figure 1a is shown enlarged several times. As seen in Figure 1b, a multiplicity of cells of varying sizes generally from 5µm to 50µm are shown. The cells are bounded from one another by thin cell walls.

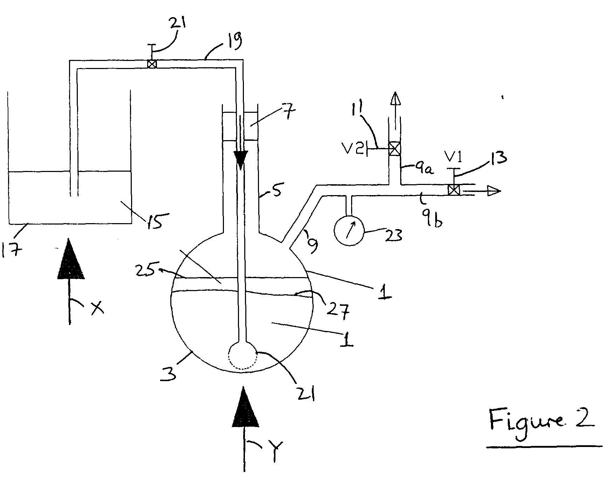

As shown in Figure 2, a collection of porous ceramic granules 1 of the kind described and illustrated in Figure 1 is contained in a flask 3. The flask 3 has a neck 5 sealed by a seal 7 and a branched outlet tube 9, which has branches 9a, 9b leading via open/shut valves 11, 13 to a vacuum pump (not shown) and an external air atmosphere respectively. The pressure inside the flask 3 is recorded on a gauge 23.

A liquid source 15 of a solution containing the chemical to be loaded into the pores of the granules 1 is contained in a vessel 17. A delivery line 19 containing an on/off valve 21 leads from the source 15 to the flask 3. The line 19 has an end in the form of a closed perforated bulb 21 near to the bottom of the flask 3 and buried in the granules 1.

In use, the valves 13 and 21 are closed and the valve 11 is opened. The flask 3 and its contents are evacuated by the action of the vacuum pump. The vessel 17 and the flask 3 are heated by applying heat as indicated by arrows X and Y to a temperature below the boiling point of the solution in the source 15, eg. a temperature in the range 30°C to 90°C. The pressure inside the flask 3 being evacuated as indicated on the gauge 23 is monitored. When this pressure reaches a minimum, preferably less than 6 x 10⁻⁴ g/cm³, it is maintained at the minimum for a suitable period, eg. 10 minutes. The valve 11 is then closed and the valve 21 is opened. The solution in the source 15 flows from the vessel 17 into the flask 3 via the bulb 23. The solution flows laterally and upwardly into the flask 3 and seeps through the granules 1 and eventually forms a body of liquid in the flask 1 which saturates the granules 1. The body of liquid is allowed to rise to a level 25, about 20% by volume above the upper level of the granules 1 indicated by reference numeral 27. The valve 21 is then closed and the valve 13 is opened. This allows atmospheric air to enter the flask 3 above the level 25 of the solution effectively pressurising the system and forcing more solution into the pores of the granules 1.

After a pressure equilibrium has been reached, the contents of the flask 3 are poured into a screen or filter (not shown) to remove excess loading solution. This is preferably carried out quickly when the solution has been heated to prevent crystallisation from the cooling solution.

The filtered, chemical-loaded granules are then dried to remove the solvent of the loading solution. Where the solution is an aqueous one the drying may be carried out by use of an oven, eg. for a period of 1 to 2 hours.

The following Examples illustrate preparation and loading of porous ceramic material similar to that shown in Figure 1 using the apparatus and method described with reference to Figure 2.

### Example 1:

A ball clay in the form of a substantially dry powder was fed at a rate of 15kg.hr⁻¹ into the feed inlet of a co-rotating, twin-screw compounder extruder with inlets provided along the length of its casing to permit the introduction of liquid additives into the material passing through the extender. At the same time sufficient water to form a suspension containing 60% by weight of dry ball clay was injected through some of the inlets in the casing of the extruder.

The ball clay had a particle size distribution such that 85% by weight consisted of particles having an equivalent spherical diameter smaller than 2µm and the following mineralogical composition:

| | |
|---|---|
| kaolinite | 56% by weight |
| mica | 34% by weight |
| quartz | 10% by weight. |

There was also introduced, through an inlet situated approximately midway between the feed inlet and the extruder plate, foam which had been separately generated by forcing a mixture of water, air and a surfactant which was a sodium salt of a linear alkyl ethoxy sulphate through a fine mesh. The resultant foamed mixture was extruded through a plurality of apertures of diameter approximately 2.5mm onto a wire mesh belt to form granules in the form of pellets several millimetres long which were dried in a dryer at a temperature of 150°C for one hour. A multiplicity of the granules were transferred to a rotary calciner and the granules were calcined at a temperature of about 1100°C for a period of 15 minutes. The granules were found to have a density of 0.541g.cm⁻³, which corresponds to a voidage of 80% by volume.

A sample of the granules was placed in a closed container and heated to a temperature of 70°C. A vacuum of 0.89bar was applied to the heated granules for a time of 10 minutes, and there was then introduced into the closed container a previously prepared saturated solution of potassium nitrate at 70°C which covered the granules while the pressure was allowed to return to atmospheric. In this way the voidage of the granules was substantially filled with potassium nitrate solution. The excess potassium nitrate solution was then removed and the loaded granules were dried at 140°C for 16 hours. The granules were weighed and the weight of potassium nitrate retained was determined. Potassium nitrate was used to represent a water-soluble active material such as might be required to be absorbed within, and released under controlled conditions from, the granular material.

10g samples of the loaded granules were placed in a glass column fitted with a sintered base. Deionised water was then passed through the column at controlled rates of 184ml.min⁻¹ and 43ml.min⁻¹, (Experiments A and B respectively), from a 2 litre reservoir. A conductivity meter was provided downstream from the column, the signals from the meter being processed and recorded by a data logger, and the rate of release of potassium nitrate from the granules was monitored by recording the conductivity of the water leaving the column at the two flow rates.

A further experiment (C) was performed in which a 10g sample of the loaded granules was introduced into 2 litres of deionised water in the reservoir with gentle agitation. The water containing dissolved potassium nitrate was then pumped past the conductivity meter at a rate of 184ml.min⁻¹ and the change in conductivity with time was recorded.

A final, control, experiment was performed in which an amount of potassium nitrate crystals equal to that retained in 10g of the loaded granules was placed in the column and deionised water was passed through the column at a rate of 184ml.min⁻¹ and the change in conductivity with time was recorded.

Plots showing the variation of conductivity with time are shown in Figure 1.

It can be seen that, in the control experiment, the whole of the potassium nitrate dissolved in about 15 seconds, after which time the conductivity began to decrease as the solution of potassium nitrate was diluted by further deionised water from the reservoir.

The rate of dissolution of potassium nitrate was about the same for Experiment A (loaded granules in column - flow rate 184ml.min⁻¹) and for Experiment C (loaded granules in reservoir - flow rate 184ml.min⁻¹). There was an initial rapid rise in conductivity as potassium nitrate deposited on the surface of the granules was removed, followed by a slower rise in conductivity as potassium nitrate which had been retained within the voidage of the granules diffused out.

In the case of Experiment C (loaded granules in column - flow rate 43ml.min⁻¹) the rate of dissolution of potassium nitrate was considerably slower.

### EXAMPLE 2

A further sample of porous inorganic granules was prepared by the method described in Example 1 above. The particles were found to have a density of 0.492g.cm⁻³ which corresponds to a voidage of 82% by volume.

A biocide, 1,2-dibromo-2,4-dicyanobutane, was absorbed into the voidage of the granules. The biocide has a melting point of 55°C, and it was therefore possible to introduce the biocide into the granules in a molten state. 5g of the granules was mixed with 8.3g of the solid biocide in a round bottomed flask. The flask was connected to a source of vacuum at 0.98bar and maintained at this reduced pressure for 10-15 minutes. The flask was then lowered into a water bath at 65°C, and the biocide melted and was slowly absorbed into the voidage of the granules. It was found that the granules had absorbed approximately twice their own weight of the biocide.

The rate of release of the biocide from the loaded granules was determined by placing 390mg of the loaded granules, containing 246mg of absorbed biocide, in 100ml of a mixture of 9 parts by volume of water to 1 part by volume of methanol. The biocide is soluble in this mixture although it is only sparingly soluble in water alone. The mixture was maintained at a temperature of 21°C and stirred constantly. Samples of the water/methanol medium were taken at intervals and subjected to analysis by uv - visible spectroscopy. The magnitude of a peak at the wavelength of 256nm was determined and used as a measure of the quantity of the biocide released into the medium. The amount of biocide released after a given time was plotted and the resultant graph is shown in Figure 2.

The experiment was repeated using, in place of the porous inorganic granules prepared by the method described in Example 1, a porous inorganic material prepared by flocculating an aqueous suspension of a ball clay with dilute sulphuric acid and separating the flocculated clay by filtration. The filter cake was then thermally dried and crumbled to give particles of the desired size. These particles were then calcined at a temperature of 1050°C. This material (known as "BIOFIX E5") consisted of substantially spherical granules of overall diameter between 0.2mm and 0.5mm, and had a voidage of 53% by volume. The material was loaded with the biocide by the method described above, except that, in this case, 5g of the granules was mixed with 4.1g of the biocide. A quantity of loaded granules such that the weight of biocide absorbed was as nearly as possible equal to 246mg was mixed with 100ml of water/methanol mixture, and the rate of release of the biocide from this material was determined by the method described above. The graph of amount of biocide released in a given time is shown in Figure 2.

As a control, 246mg of biocide, in the absence of any porous inorganic material was mixed with 100ml of the water/methanol mixture, and the rate of dissolution of the biocide was determined as described above. The graph of the amount of biocide dissolved in a given time is shown in Figure 2.

## Claims

1. A method of producing a porous, ceramic material comprising granules of an extruded, foamed material comprising a kandite clay which method includes the steps of producing a foamed ceramic-forming material from a wet kandite clay-containing particulate material, extruding the foamed ceramic-forming material in the form of pellets or prills and calcining the extruded pellets or prills to provide an inner structure comprising closed cell pores within the pellets or prills, and characterised in that the calcining is carried out in a rotary calciner, whereby a multiplicity of the pellets or prills are tumbled over one another during calcination, the granules produced thereby having a continuous outer skin which has a porosity which allows fluids to diffuse slowly therethrough, the granules being suitable for the storage and slow release of a chemical or chemicals from the closed cells of the inner structure of the granules.

2. A method according to claim 1 and wherein the extruded pellets or prills are dried prior to calcining.

3. A method as claimed in claim 1 or claim 2 and wherein the calcining temperature is not more than 100°C below the fluxing temperature of the material being calcined.

4. A porous ceramic material produced by the method according to claim 1, claim 2 or claim 3 and which comprises granules having an inner structure comprising closed cell pores and, covering substantially all of the material comprising the inner structure, a continuous outer skin having a porosity which allows fluids to diffuse slowly through the outer skin, wherein the outer skin has pores less than 0.1µm in size.

5. A porous ceramic material according to claim 4 and wherein the continuous outer skin has an outer surface area at least 99% of which has no pores greater than 1µm in size.

6. A porous ceramic material as claimed in claim 4 or claim 5, and including also, and contained within the said cellular pores, a chemical or chemicals to be slowly released therefrom.

7. A method of preparing a porous granular material containing a chemical releasable therefrom which comprises the steps of forming granules of a porous ceramic material as claimed in any one of claims 4 to 6, placing the granules in an evacuable enclosure, evacuating the enclosure and allowing the chemical, or a substance to be converted into the chemical, to be absorbed into the granules to be stored in the closed cell pores thereof.

8. A method as claimed in claim 7 and which includes delivering from a source outside the enclosure a stream comprising the chemical to be contained by the granules to load the cellular pores of the granules with the chemical.

9. A method as claimed in claim 8 and wherein the pressure differential between the evacuated enclosure and the outside environment is partially equilibrated through a source of the chemical whereby the chemical is sucked into the enclosure.

10. A method as claimed in claim 7,8 or 9 and wherein the source of the chemical comprises a liquid solution of the chemical in a solvent.

11. A method as claimed in 7,8 or 9 and wherein the source of the chemical comprises the chemical itself in melted form.

12. A method as claimed in any one of claims 8 to 11 and wherein the stream of the chemical is admitted into the enclosure at an inlet which is adapted so that the chemical may permeate laterally and upwardly through the granules within the enclosure.

13. A method as claimed in any one of claims 8 to 12 and wherein the stream comprising the chemical comprises a heated liquid.

14. A method as claimed in any one of claims 8 to 13 and wherein the stream comprises a liquid solution containing the chemical and the granules, after loading with the solution, are dried to remove solvent of the solution.

## Patentansprüche

1. Verfahren zur Herstellung eines porenhaltigen Keramikmaterials, beinhaltend Körnchen aus einem extrudierten, geschäumten Material, das Kanditton enthält, umfassend die Schritte:
Herstellen eines geschäumten keramikbildenden Materials aus einem nassen Kanditton-haltigen Teilchenmaterial;
Extrudieren des geschäumten keramikbildenden Materials in die Form von Pellets oder Granalien; und
Kalzinieren der extrudierten Pellets oder Granalien, wobei man eine innere Struktur bereitstellt, die innerhalb der Pellets oder Granalien geschlossenzellige Poren aufweist; dadurch gekennzeichnet, dass
das Kalzinieren in einem Rotationsbrennofen erfolgt, so dass beim Kalzinieren eine Anzahl Pellets oder Granalien übereinandergeworfen werden,
die dabei hergestellten Körnchen eine durchgängige Außenhaut besitzen, welche eine Porosität besitzt, dass Flüssigkeiten langsam hindurchdiffundieren können; und
die Körnchen geeignet sind für die Speicherung und die langsame Freigabe ein oder einer Anzahl Chemiestoffe aus den geschlossenen Zellen der inneren Körnchenstruktur.

2. Verfahren nach Anspruch 1, wobei vor dem Kalzinieren die extrudierten Pellets oder Granalien getrocknet werden.

3. Verfahren nach Anspruch 1 oder 2, wobei die Kalzinierungstemperatur nicht mehr als 100°C unterhalb der Fließtemperatur des zu kalzinierenden Materials liegt.

4. Porenhaltiges Keramikmaterial, hergestellt durch das Verfahren nach Anspruch 1, 2 oder 3, umfassend Körnchen mit einer inneren Struktur, die geschlossenzellige Poren aufweist, und von einer durchgängigen Außenhaut, welche im Wesentlichen das ganze Material, das die Innenstruktur aufweist, überdeckt sind und die eine Porosität besitzt, dass Flüssigkeiten langsam durch die Außenhaut diffundieren können, wobei die Poren der Außenhaut weniger als 0,1 µm groß sind.

5. Porenhaltiges Keramikmaterial nach Anspruch 4, wobei die durchgängige Außenhaut eine äußere Oberfläche hat, die auf wenigstens 99% der Fläche keine Poren aufweist, die größer als 1 µm sind.

6. Porenhaltiges Keramikmaterial nach Anspruch 4 oder 5, das zudem, enthaltend in den zellenartigen Poren, einen oder eine Anzahl Chemiestoffe enthält, welche langsam daraus freigesetzt werden.

7. Verfahren zur Herstellung eines porenhaltigen Körnchenmaterials, das einen daraus freisetzbaren Chemiestoff enthält, umfassend die Schritte:
Herstellen von Körnchen aus einem porenhaltigen Keramikmaterial nach einem der Ansprüche 4 bis 6;
Einbringen der Körnchen in ein evakuierbares Gehäuse;
Evakuieren des Gehäuses und Absorbieren lassen des Chemiestoffs oder einer Substanz, die in den Chemiestoff umgewandelt wird, in die Körnchen, so dass dieser in deren geschlossenzelligen Poren gespeichert wird.

8. Verfahren nach Anspruch 7, zudem umfassend das Anbringen aus einer Quelle außerhalb des Gehäuses eines Stroms, welcher den Chemiestoff enthält, der in die Körnchen gebracht werden soll, so dass die zellulären Poren der Körnchen mit dem Chemiestoff beladen werden.

9. Verfahren nach Anspruch 8, wobei der Druckunterschied zwischen dem evakuierten Gehäuse und der Außenumgebung durch eine Quelle für den Chemiestoff teilweise ausgeglichen wird, wodurch der Chemiestoff in das Gehäuse gesogen wird.

10. Verfahren nach Anspruch 7, 8 oder 9, wobei die Quelle für den Chemiestoff eine flüssige Lösung des chemischen Stoffs in einem Lösungsmittel umfasst.

11. Verfahren nach Anspruch 7, 8 oder 9, wobei die Quelle für den Chemiestoff der Stoff selbst in geschmolzener Form beinhaltet.

12. Verfahren nach einem der Ansprüche 8 bis 11, wobei der Strom des Chemiestoffs in das Gehäuse zugelassen wird an einem Einlass, der so eingerichtet ist, dass der Chemiestoff von der Seite und nach oben durch die Körnchen in das Gehäuse dringen kann.

13. Verfahren nach einem der Ansprüche 8 bis 12, wobei der den Chemiestoff enthaltende Strom eine erhitzte Flüssigkeit umfasst.

14. Verfahren nach einem der Ansprüche 8 bis 13, wobei der Strom eine flüssige, den Chemiestoff enthaltende Lösung umfasst und die Körnchen nach dem Beladen mit der Lösung getrocknet werden, wobei man das Lösungsmittel der Lösung entfernt.

## Revendications

1. Procédé de production d'un matériau céramique poreux comprenant des granules d'un matériau expansé extrudé contenant de l'argile de kandite, lequel procédé comprend les étapes de fabrication d'un matériau expansé formateur de céramique à partir d'un matériau particulaire humide contenant de l'argile de kandite, d'extrusion du matériau expansé formateur de céramique sous la forme de pastilles ou de pépites, et de calcination des pastilles ou pépites pour fournir une structure interne comprenant des pores à cellules fermées au sein des pastilles ou des pépites, et caractérisé en ce que la calcination est réalisée dans un four de calcination rotatif, ce qui permet de faire culbuter les unes sur les autres de multiples pastilles ou pépites pendant la calcination, les granules produits de cette façon possédant une croûte externe continue qui a une porosité qui permet aux fluides de diffuser lentement à travers celle-ci, les granules étant appropriés pour le stockage et la libération lente d'un produit chimique ou de plusieurs produits chimiques depuis les cellules fermées de la structure interne des granules.

2. Procédé selon la revendication 1, et dans lequel les pastilles ou pépites extrudées sont séchées avant la calcination.

3. Procédé tel que revendiqué dans la revendication 1 ou dans la revendication 2, et dans lequel la température de calcination n'est pas supérieure à 100°C en dessous de la température de fluage du matériau à être calciné.

4. Matériau céramique poreux produit par le procédé selon la revendication 1, la revendication 2 ou la revendication 3, et qui comprend des granules possédant une structure interne comprenant des pores à cellules fermées, et recouvra pratiquement tout le matériau comprenant la structure interne, une croûte externe continue possédant une porosité qui permet aux fluides de diffuser lentement à travers la croûte externe, avec la croûte externe ayant des pores de moins de 0,1 µm en taille.

5. Matériau céramique poreux selon la revendication 4, et dans lequel la croûte externe continue possède une aire surfacique externe dont au moins 99% ne comportent aucun pore supérieur à 1 µm en taille.

6. Matériau céramique poreux tel que revendiqué dans la revendication 4 ou la revendication 5, et comprenant également, contenu dans lesdits pores cellulaires, un produit chimique ou des produits chimiques destinés à être lentement libérés depuis ceux-ci.

7. Procédé de préparation d'un matériau granulaire poreux contenant un produit chimique libérable depuis celui-ci, lequel comprend les étapes consistant à former des granules d'un matériau céramique poreux tel que revendiqué dans l'une quelconque des revendications 4 à 6, à placer les granules dans une enceinte pouvant être mise sous vide, à mettre sous vide l'enceinte, et à laisser le produit chimique, ou bien la substance destinée à être convertie en un produit chimique, être absorbé dans les granules pour être stocké dans les pores cellulaires fermés de ceux-ci.

8. Procédé tel que revendiqué dans la revendication 7, et lequel comprend le fait de délivrer depuis une source située hors de l'enceinte un flux comprenant un produit chimique destiné à être contenu dans les granules, afin de charger les pores cellulaires des granules avec le produit chimique.

9. Procédé tel que revendiqué dans la revendication 8, et dans lequel la différence de pression entre l'enceinte mise sous vide et l'environnement extérieur est partiellement équilibrée grâce à la source du produit chimique, ce qui permet d'introduire le produit chimique par aspiration dans l'enceinte.

10. Procédé tel que revendiqué dans la revendication 7, 8 ou 9, et dans lequel la source du produit chimique comprend une solution liquide du produit chimique dans un solvant.

11. Procédé tel que revendiqué dans la revendication 7, 8, ou 9, et dans lequel la source du produit chimique comprend le produit chimique lui-même sous la forme fondue.

12. Procédé tel que revendiqué dans l'une quelconque des revendications 8 à 11, et dans lequel le flux du produit chimique est admis dans l'enceinte au niveau d'un orifice d'admission qui est adapté de façon à ce que le produit chimique puisse pénétrer latéralement et vers le haut à travers les granules situés dans l'enceinte.

13. Procédé tel que revendiqué dans l'une quelconque des revendications 8 à 12, et dans lequel le flux comprenant le produit chimique comprend un liquide chauffé.

14. Procédé tel que revendiqué dans l'une quelconque des revendications 8 à 13, et dans lequel le flux comprend une solution liquide contenant le produit chimique, et les granules, après chargement avec la solution, sont séchés pour éliminer le solvant de la solution.
